# EUROPEAN PATENT APPLICATION

(11) **EP 3 459 821 A1**
(43) Date of publication of application: **27.03.2019**
(21) Application number: 18195656.6
(22) Date of filing: 20.09.2018
(51) Int. Cl.: B62D 5/04

(54) **STEERING SYSTEM**

(30) Priority: 22.09.2017 JP 2017182749
(71) Applicant: JTEKT Corporation, Osaka-shi, Osaka 542-8502 (JP)
(72) Inventor: KONDO, Yoshio, Osaka-shi,, Osaka 542-8502 (JP); IGARASHI, Manabu, Osaka-shi,, Osaka 542-8502 (JP)
(74) Representative: Winter, Brandl, Fürniss, Hübner, Röss, Kaiser, Polte - Partnerschaft mbB

(57) **Abstract**

Provided is a steering system including a low-cost rolling bearing with high supporting rigidity wherein generation of rattling noise during operation is prevented. A steering system (10) includes a housing (11), a steered shaft (20), a ball screw device (40), a motor (M), a drive force transmission mechanism (32), and a bearing device (50). A ball nut portion (211) is formed in a first range (Ar1), and the bearing device (50) supports a nut (21) on the housing (11) in a second range (Ar2). The bearing device (50) includes an outer ring (51), a first inner ring portion (52) formed as a part of the nut (21) in the second range (Ar2), a second inner ring (53) fitted to the outer peripheral surface of the nut (21) in the second range (Ar2), a plurality of bearing balls (54), and an enlarged diameter portion (55) formed as a part of the nut (21) in the second range (Ar2).

## Description

### BACKGROUND OF THE INVENTION

### 1. Field of the Invention

The invention relates to a steering system.

### 2. Description of Related Art

There is a rack-shaft assist type steering system in which an electric motor generates an axial thrust force for a rack shaft (steered shaft) to assist operations of the rack shaft (steered shaft). In such a steering system, a rack shaft has an external thread formed on the outer peripheral surface thereof, while a nut disposed on the radially outer side of the rack shaft has an internal thread formed on the inner peripheral surface thereof. Further, a plurality of balls are disposed between the external thread and the internal thread facing each other. Thus, a ball screw device is formed.

Generally, the nut is formed in a tubular shape, and has one end supported on a housing via a rolling bearing. The nut has the other end to which a rotational drive force is transmitted from the motor. Thus, it is preferable that the rolling bearing supporting the one end of the nut have rigidity high enough to accurately keep the rotational axis of the nut rotationally driven by the motor, without wobbling. This is especially preferable in the case of a so-called rack-parallel steering system in which a motor including an output shaft disposed away from and parallel to a rack shaft (steered shaft) generates an axial thrust force for the rack shaft to assist operations of the rack shaft.

As mentioned above, in the rack-parallel steering system, the nut has one end supported on the housing via the rolling bearing. Further, the nut has the other end coupled to the output shaft of the motor via a toothed belt. Accordingly, when the motor rotates, the nut rotates. As the nut rotates, the rack shaft moves in the axial direction. Thus, the rolling bearing needs to support the load applied to the nut due to the tension of the toothed belt in a cantilever manner, and therefore needs to have high supporting rigidity.

Examples of rolling bearings that satisfy such a need includes a double-row angular ball bearing that provides high rigidity by applying a preload in the thrust direction to the inner ring or the outer ring and eliminating the clearance between the balls and each of the raceway of the outer ring and the raceway of the inner ring therein. In the double-row angular ball bearing, since the clearance between the balls and each of the raceway of the outer ring and the raceway of the inner ring can be eliminated therein, generation of abnormal noise (rattling noise) due to clearances between the balls and the outer ring and between the balls and the inner ring can be prevented.

However, a double-row angular ball bearing is expensive. Moreover, when mounting the double-row angular ball bearing on the nut, it is necessary to fasten the inner ring in the axial direction using a lock nut, for example, and to adjust the preload on the balls by controlling the fastening torque of the lock nut. This increases man-hours, resulting in a further increase in cost.

According to a technique disclosed in United States Patent Application Publication No. 2014/0096633 (US2014/0096633A1), a double-row angular ball bearing includes a first inner ring and a second inner ring each having a deep groove. The first inner ring is formed as a part of the nut so as to be an integral unit of the nut. Whereas, the second inner ring is formed as a separate unit, and is fixed to the nut by a plurality of bolts. Further, an outer ring having two rows of angular grooves that is formed as a separate unit is disposed on the radially outer side of the first and second inner rings, and two rows of balls are installed between the outer ring and the first and second inner rings. In this manner, the double-row angular ball bearing is formed. Thus, the manufacturing cost can be reduced compared to the case where a double-row angular ball bearing is purchased and mounted.

However, according to the technique disclosed in US2014/0096633A1, the second inner ring formed as a separate unit is fixed to the nut by a plurality of bolts disposed in the circumferential direction about the axis thereof. Therefore, the number of components is increased, and it is troublesome to fix the bolts. This reduces the cost reduction effect. Further, according to the technique disclosed in US2014/0096633A1, the magnitude of the preload applied to the balls of the double-row angular ball bearing is adjusted by the force of fastening the plurality of bolts. This is troublesome, and also reduces the cost reduction effect.

### SUMMARY OF THE INVENTION

An object of the present invention is to provide a steering system including a low-cost rolling bearing with high supporting rigidity wherein generation of rattling noise during operation is prevented.

A steering system according to an aspect of the present invention includes a housing; a steered shaft supported on the housing so as to be reciprocally movable in an axial direction thereof to steer steered wheels; a ball screw device including a ball screw portion formed on an outer peripheral surface of the steered shaft, a nut disposed on an outer peripheral side of the ball screw portion and having a ball nut portion on an inner peripheral surface, and a plurality of rolling balls arranged between the ball screw portion and the ball nut portion; a motor fixed to the housing; a drive force transmission mechanism that transmits a drive force from the motor to the nut; and a bearing device that supports the nut such that the nut is rotatable about the axis thereof relative to the housing. The ball nut portion is formed in a first range on a first end side of the nut in an axial direction thereof, and the bearing device supports the nut on the housing in a second range on a second end side of the nut in the axial direction thereof.

The bearing device includes: an outer ring disposed on an inner peripheral side of the housing, and having a first outer ring raceway formed on an inner peripheral surface thereof on a ball nut portion side in the second range of the nut, and a second outer ring raceway formed on the second end side in the second range of the nut; a first inner ring portion formed as a part of the nut in the second range, and having a first inner ring raceway formed on an outer peripheral surface thereof at a position corresponding to the first outer ring raceway of the outer ring; a second inner ring having a second inner ring raceway formed on the outer peripheral surface thereof at a position corresponding to the second outer ring raceway of the outer ring, and fitted to an outer peripheral surface of the nut in the second range; a plurality of bearing balls that roll in two rows respectively between the first outer ring raceway and the first inner ring raceway and between the second outer ring raceway and the second inner ring raceway; and an enlarged diameter portion formed as a part of the nut in the second range, supporting an end of the second inner ring on a side opposite to the first inner ring portion, and having an outside diameter greater than a bore diameter of the second inner ring.

In this manner, the bearing device includes: the outer ring formed as a separate unit from the nut; the first inner ring portion formed integrally with a part of the nut in the second range; the second inner ring formed as a separate unit from the nut and fitted to the outer peripheral surface of the nut in the second range; the bearing balls; and the enlarged diameter portion formed as a part of the nut in the second range and supporting an end of the second inner ring on the side opposite to the first inner ring portion; thereby forming a double-row angular ball bearing. Accordingly, the bearing device can be manufactured at low cost compared to the case where a double-row angular ball bearing is purchased and mounted on a bearing device. Further, the second inner ring formed as a separate unit from the nut can be prevented from coming off, by the simple enlarged diameter portion that can be formed by caulking or the like, for example. Therefore, the cost can be effectively reduced in this regard as well.

Further, by applying the above configuration to a rack-parallel steering system, it is possible to reduce fluctuations of the steering torque of the steering system, and improve the steering feeling. The reason for this is as follows. In a related-art technique, a double-row angular ball bearing is used that has two inner rings formed separately from a nut, and the inner rings are clearance-fitted to the nut. Therefore, when the inner rings are fixed to the nut, the central axis of the nut is eccentric or inclined with respect to the central axis of the double-row angular ball bearing. When the nut rotates about the axis thereof with eccentricity or inclination, the rotational resistance of the nut fluctuates, and hence the steering torque of the steering system fluctuates. To cope with this issue, the first inner ring of the inner rings is formed integrally with the nut, thereby making it possible to reduce the eccentricity or inclination, and to reduce fluctuations of the rotational resistance of the nut. Further, the clearance between the bearing balls and each raceway can be eliminated, so that generation of rattling noise can be prevented.

### BRIEF DESCRIPTION OF THE DRAWINGS

The foregoing and further features and advantages of the invention will become apparent from the following description of example embodiments with reference to the accompanying drawings, wherein like numerals are used to represent like elements and wherein:
FIG. 1 is a schematic diagram illustrating an electric power steering system according to the present invention;
FIG. 2 is an enlarged cross-sectional view illustrating a bearing device and a steering assist mechanism of FIG. 1 according to an embodiment;
FIG. 3 is an enlarged view illustrating the bearing device of FIG. 2;
FIG. 4A is a diagram illustrating the bearing device of FIG. 3 before a second inner ring and a second seal member are mounted in an assembly process;
FIG. 4B is a diagram illustrating the bearing device of FIG. 4A after the second inner ring and the second seal member are mounted; and
FIG. 4C is a diagram illustrating the bearing device of FIG. 4B after an enlarged diameter portion is caulked.

### DETAILED DESCRIPTION OF EMBODIMENTS

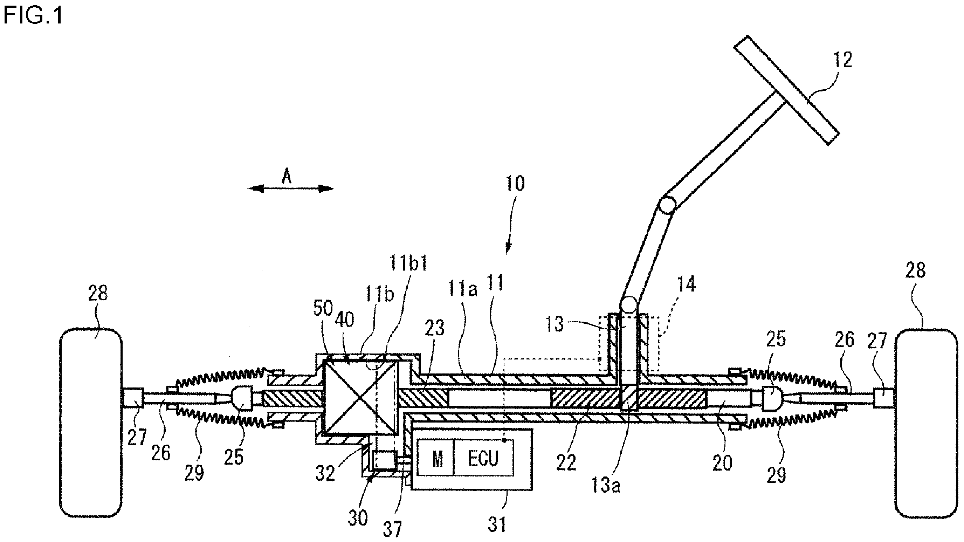

Hereinafter, embodiments of the present invention will be described with reference to the drawings. FIG. 1 is a general view illustrating an electric power steering system (corresponding to a steering system) according to the present invention. The electric power steering system is a steering system that assists steering by providing a steering assist force.

The electric power steering system 10 (hereinafter simply referred to as a "steering system 10") is a system that changes the direction of the steered wheels 28 and 28 of a vehicle by reciprocally moving a steered shaft 20 coupled to the steered wheels 28 and 28 in a direction A (right-left direction in FIG. 1) that coincides with the axial direction of the steered shaft 20.

As illustrated in FIG. 1, the steering system 10 includes a housing 11, a steering wheel 12, a steering shaft 13, a torque detection device 14, an electric motor M (corresponding to a motor, and hereinafter referred to as a "motor M"), the steered shaft 20 described above, a steering assist mechanism 30, a ball screw device 40, and a bearing device 50.

The housing 11 is a fixed member fixed to the vehicle. The housing 11 is formed in a tubular shape, and supports the steered shaft 20 inserted therein such that the steered shaft 20 is reciprocally movable in the direction A. The housing 11 includes a first housing 11a, and a second housing 11b fixed to a second end side (left side in FIG. 1) of the first housing 11a in the direction A.

The steering wheel 12 is fixed to an end of the steering shaft 13, and is supported so as to be rotatable in the interior of the vehicle. The steering shaft 13 transmits the torque applied to the steering wheel 12 by an operation of the driver to the steered shaft 20.

The steering shaft 13 has a pinion 13a at the other end on the steered shaft 20 side. The pinion 13a forms a rack-and-pinion mechanism. The torque detection device 14 detects torque applied to the steering shaft 13, on the basis of the amount of torsion of the steering shaft 13.

The steered shaft 20 extends in the direction A. The steered shaft 20 has a rack 22. The rack 22 meshes with the pinion 13a of the steering shaft 13, and forms the rack-and-pinion mechanism, together with the pinion 13a. The maximum axial force that the rack-and-pinion mechanism can transmit between the steering shaft 13 and the steered shaft 20 is set according to the intended use of the steering system 10 or the like.

The steered shaft 20 also has joints 25 and 25 at the opposite ends thereof. Tie rods 26 and 26 are coupled to first ends of the joints 25 and 25. The distal ends of the tie rods 26 and 26 are coupled to the right and left steered wheels 28 and 28 via knuckle arms 27 and 27.

With this configuration, when the steering wheel 12 is operated, the steered shaft 20 is linearly reciprocally moved via the rack-and-pinion mechanism. The movement in the direction A is transferred to the knuckle arms 27 and 27 via the tie rods 26 and 26, so that the steered wheels 28 and 28 are steered to change the advancing direction of the vehicle.

First ends of boots 29 and 29 are fixed to the opposite ends of the housing 11 in the direction A. The boots 29 and 29 are made of resin, for example. Each boot 29 has a tubular bellow portion that mainly covers a joint portion between the corresponding joint 25 and the corresponding tie rod 26, and is expandable in the direction A. Second ends of the boots 29 and 29 are fixed to the tie rods 26 and 26. The boots 29 and 29 prevent entry of foreign matter, such as dust and water, into the housing 11 and the joints 25 and 25.

The steered shaft 20 also has a ball screw portion 23 at a position different from the rack 22. The ball screw portion 23 forms the ball screw device 40, together with a ball nut portion 211 of a nut 21 (described below), and receives a steering assist force transmitted from the steering assist mechanism 30.

The steering assist mechanism 30 is a mechanism that applies a steering assist force to the steered shaft 20 using the motor M fixed to the housing 11 as a drive source. The steering assist mechanism 30 includes the motor M, a control unit ECU that controls the motor M, and a drive force transmission mechanism 32. The motor M and the control unit ECU that drives the motor M are accommodated in and fixed to a case 31 that is fixed to the first housing 11a of the housing 11. The control unit ECU determines steering assist torque, and controls the output of the motor M, on the basis of a signal output from the torque detection device 14.

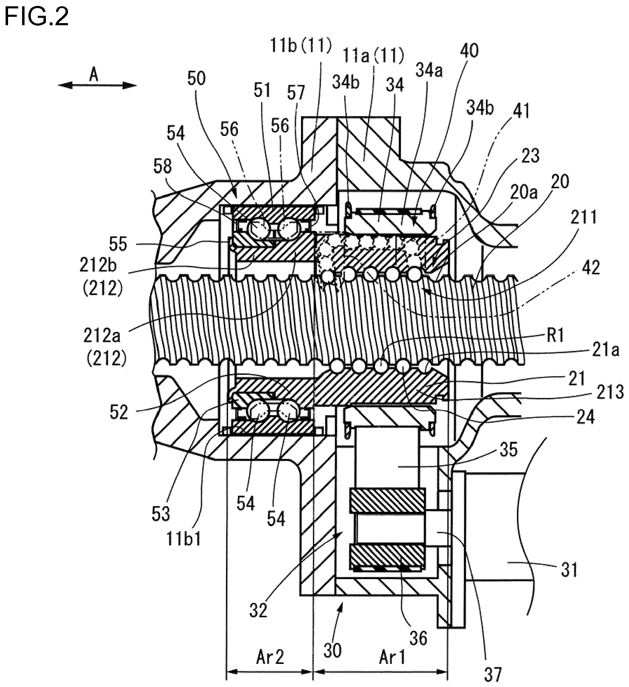

As illustrated in FIG. 2, the drive force transmission mechanism 32 includes a drive pulley 36, a driven pulley 34, and a toothed belt 35. Each of the drive pulley 36 and the driven pulley 34 is a toothed pulley that includes external helical teeth. The toothed belt 35 is an annular rubber belt having a plurality of helical internal teeth on the inner peripheral side thereof.

The drive pulley 36 is disposed on an output shaft 37 of the motor M so as to be rotatable therewith. The output shaft 37 is disposed parallel to and offset by a predetermined amount from the axis of the steered shaft 20. The predetermined amount of offset may be arbitrarily set.

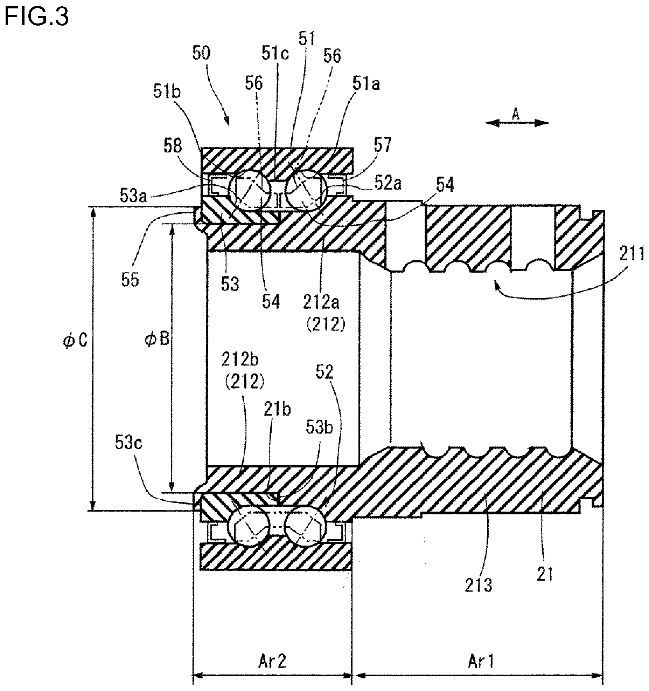

The driven pulley 34 is coupled to the drive pulley 36 via the toothed belt 35, and is disposed on the outer peripheral side of the nut 21 (described below in detail) in a first range Ar1 (see FIGS. 2 and 3) so as to be rotatable with the nut 21. The driven pulley 34 is a tubular member that includes a pulley body 34a and ribs 34b and 34b. In the present embodiment, the ribs 34b and 34b are formed as separate units from the driven pulley 34, and have an annular shape. The ribs 34b and 34b are press-fitted and fixed to the opposite sides of the external teeth of the driven pulley 34 (pulley body 34a) in the direction A.

The toothed belt 35 extends between the outer periphery of the driven pulley 34 and the outer periphery of the drive pulley 36 so as to mesh with helical teeth provided on the outer peripheries thereof. The toothed belt 35 extends between the driven pulley 34 and the drive pulley 36 with predetermined tension so as not to be disengaged from the driven pulley 34 and the drive pulley 36.

With this configuration, the drive force transmission mechanism 32 transmits a rotational drive force (drive force) between the drive pulley 36 and the driven pulley 34. Further, a tubular bearing support portion 212 formed in a second range Ar2 (see FIGS. 2 and 3) on a second end side (left side in FIG. 2) of the nut 21 in the direction A (axial direction) is supported so as to be rotatable relative to an inner peripheral surface 11b1 of the second housing 11b via the bearing device 50 (described below). The bearing support portion 212 is formed coaxially and integrally with a driven pulley support portion 213 that supports the driven pulley 34 in the first range Ar1 on the first end side of the nut 21. Accordingly, the nut 21 is supported so as to be rotatable relative to the housing 11 via the bearing device 50. In the present embodiment, the first range Ar1 and the second range Ar2 do not overlap each other in the axial direction.

As illustrated in FIG. 2, a major part of the ball screw device 40 is accommodated in the first housing 11a. The ball screw device 40 includes the ball screw portion 23 formed on the outer peripheral surface of the above-described steered shaft 20, the above-described nut 21 disposed on the outer peripheral side of the ball screw portion 23 and having the ball nut portion 211 formed on the inner peripheral surface thereof, a plurality of rolling balls 24 arranged between the ball screw portion 23 and the ball nut portion 211, and two deflectors 41 and 42 (see the long dashed double-short dashed lines in FIG. 2).

The ball screw portion 23 of the steered shaft 20 has a helical outer peripheral rolling groove 20a formed on the outer peripheral surface thereof. The outer peripheral rolling groove 20a has multiple turns. The nut 21 is formed in a tubular shape, and is disposed coaxially with the ball screw portion 23 (steered shaft 20) on the outer peripheral side of the ball screw portion 23. As mentioned above, the nut 21 includes the ball nut portion 211 on the inner peripheral surface of the driven pulley support portion 213 in the first range Ar1 on the first end side (right side in FIG. 2) in the direction A (axial direction). The ball nut portion 211 includes a helical inner peripheral rolling groove 21a facing the outer peripheral rolling groove 20a of the ball screw portion 23 (steered shaft 20) on the radially outer side thereof.

The inner peripheral rolling groove 21a has multiple turns. The outer peripheral rolling groove 20a of the ball screw portion 23 and the inner peripheral rolling groove 21a of the nut 21 are disposed to face each other, so that a rolling path R1 in which the plurality of rolling balls 24 roll is defined between the outer peripheral rolling groove 20a and the inner peripheral rolling groove 21a. The plurality of rolling balls 24 are arranged in a rollable manner in the rolling path R1. Thus, the outer peripheral rolling groove 20a of the ball screw portion 23 and the inner peripheral rolling groove 21a of the nut 21 are threadedly engaged with each other via the plurality of rolling balls 24.

A plurality of rolling balls 24 rolling in the rolling path R1 are endlessly circulated via the deflectors 41 and 42 (see the long dashed double-short dashed lines in FIG. 2) disposed in the driven pulley support portion 213 of the nut 21 in the first range Ar1 and a path (see the dashed lines in FIG. 2) connecting between the deflectors 41 and 42 disposed in the driven pulley support portion 213. The technique of endlessly circulating the rolling balls 24 using the deflectors 41 and 42 is well known and will not be described in detail.

With the configuration described above, the steering assist mechanism 30 drives the motor M in accordance with a rotation operation of the steering wheel 12, and rotates the output shaft 37 of the motor M and the drive pulley 36. Rotation of the drive pulley 36 is transferred to the driven pulley 34 via the toothed belt 35. Then, the driven pulley 34 rotates, so that the ball screw nut 21 provided integrally with the driven pulley 34 rotates. When the ball screw nut 21 rotates, a steering assist force (power) in the axial direction of the steered shaft 20 is transmitted to the steered shaft 20 via the plurality of rolling balls 24 of the ball screw device 40. Thus, the steered shaft 20 (steered shaft) is moved in the axial direction.

Next, the bearing device 50 will be described with reference to FIGS. 2 and 3. As mentioned above, the bearing device 50 is disposed in the second range Ar2 (see FIGS. 2 and 3) on the second end side of the nut 21. That is, the bearing device 50 supports the nut 21 in the second range Ar2 such that the nut 21 is rotatable relative to the housing 11.

The bearing device 50 includes an outer ring 51, a first inner ring portion 52, a second inner ring 53, a plurality of bearing balls 54 (balls), an enlarged diameter portion 55, a cage 56, a first seal member 57, and a second seal member 58. The cage 56 and the first and second seal members 57 and 58 may be a cage and seal members used in a typical angular ball bearing, and will not be described in detail.

The outer ring 51 is a tubular member. The outer ring 51 is disposed on the inner peripheral side of the second housing 11b (housing 11) such that the inner peripheral surface 11b1 of the second housing 11b and the outer peripheral surface of the outer ring 51 face each other. The outer ring 51 includes a first outer ring raceway 51a on the inner peripheral surface thereof on the ball nut portion 211 side in the second range Ar2 of the nut 21. The outer ring 51 includes a second outer ring raceway 51b on the second end side in the second range Ar2 of the nut 21. A projection 51c projecting radially inward is formed at the substantial center of the inner peripheral surface of the outer ring 51 in the direction A (axial direction).

The first outer ring raceway 51a is defined by the right inner peripheral surface of the outer ring 51 and the side surface (right side surface in FIG. 3) of the projection 51c. The second outer ring raceway 51b is defined by the second-end-side (left) inner peripheral surface of the outer ring 51 and the side surface (left side surface in FIG. 3) of the projection 51c. In this manner, in the present embodiment, the first outer ring raceway 51a and the second outer ring raceway 51b are disposed back-to-back in the direction A (axial direction).

As illustrated in FIG. 3, the first outer ring raceway 51a and the second outer ring raceway 51b have a cross-sectional shape (radius R, not illustrated) that substantially matches a part of the shape (radius R) of the outer peripheral line of the bearing ball 54 in the cross section passing through the center thereof. As illustrated in FIG. 3, both the first outer ring raceway 51a and the second outer ring raceway 51b are angular grooves.

Next, the first inner ring portion 52 will be described. The first inner ring portion 52 is a part of the nut 21 in the second range Ar2, and includes a first inner ring raceway 52a on the outer peripheral surface thereof at the position corresponding to the first outer ring raceway 51a of the outer ring 51. That is, the first inner ring portion 52 serves also as a part of the bearing support portion 212 (nut 21) in the second range Ar2 of the nut 21.

The nut 21 includes a large diameter cylindrical portion 212a having a large outside diameter, on the ball nut portion 211 side (right side in FIG. 2) of the bearing support portion 212 in the second range Ar2. The nut 21 further includes a small diameter cylindrical portion 212b having a smaller outside diameter than the large diameter cylindrical portion 212a, on the second end side (left side in FIG. 2) in the second range Ar2. The small diameter cylindrical portion 212b is disposed adjacent to the large diameter cylindrical portion 212a in the direction A. The first inner ring portion 52 described above serves also as the large diameter cylindrical portion 212a.

The first inner ring raceway 52a is formed on the outer peripheral surface of the first inner ring portion 52 (large diameter cylindrical portion 212a). The first inner ring raceway 52a is formed on the outer peripheral surface of the large diameter cylindrical portion 212a, at the position corresponding to the first outer ring raceway 51a formed on the outer ring 51, so as to face the first outer ring raceway 51a. The first inner ring raceway 52a is formed with the same radius R (not illustrated) as the first outer ring raceway 51a. In the present embodiment, as illustrated in FIG. 3, the first inner ring raceway 52a is an angular groove, and has a slope that receives a thrust load from the bearing balls 54 is formed on the ball nut portion 211 side.

The second inner ring 53 is a tubular member formed as a separate member (separate unit) from the first inner ring portion 52 (nut 21). As illustrated in FIGS. 2 and 3, the second inner ring 53 has a substantially L-shaped cross sectional shape cut in the axial direction. The inner peripheral surface of a side of the L-shaped cross section of the second inner ring 53 is fitted to the outer peripheral surface of the small diameter cylindrical portion 212b of the nut 21 in the second range Ar2 by interference fit.

The second inner ring 53 includes the second inner ring raceway 53a formed on the outer peripheral surface thereof, at the position corresponding to the second outer ring raceway 51b of the outer ring 51. As illustrated in FIG. 3, the second inner ring raceway 53a is formed to extend along two sides of the L-shape (cross-section) of the second inner ring 53. The second inner ring raceway 53a faces the first inner ring raceway 52a formed on the outer peripheral surface of the first inner ring portion 52 in the direction A. The second inner ring raceway 53a is formed with the same radius R as the second outer ring raceway 51b. In the present embodiment, as illustrated in FIG. 3, the second inner ring raceway 53a is an angular groove, and has a slope that receives a thrust load from the bearing balls 54 is formed on the second end side of the nut 21.

The plurality of bearing balls 54 are arranged in a rollable manner in two rows respectively between the first outer ring raceway 51a and the first inner ring raceway 52a and between the second outer ring raceway 51b and the second inner ring raceway 53a. The plurality of bearing balls 54 may be typical bearing balls used as balls for a bearing.

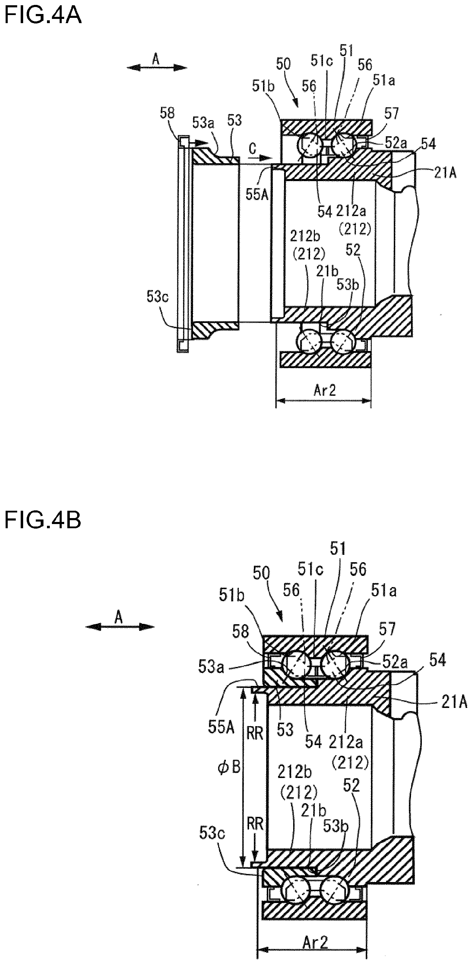

The following briefly describes mounting the second inner ring 53 to the small diameter cylindrical portion 212b (nut 21). As illustrated in FIG. 4A, the plurality of bearing balls 54, the cage 56, and the first seal member 57 are mounted between the outer ring 51 and the first inner ring portion 52 formed on the nut 21, and then the second inner ring 53 is press-fitted (interference-fitted) to the outer peripheral surface of the small diameter cylindrical portion 212b (nut 21) on the second end side of the nut 21 from a direction C. In this step, as illustrated in FIG. 4A, the nut 21 does not have the enlarged diameter portion 55, and is in a state of a nut material 21A having a large diameter portion material 55A extending in the direction A.

Then, as illustrated in FIG. 4B, the second inner ring 53 is press-fitted to a position (predetermined position) where a right end face 53b of the second inner ring 53 and a radially stepped face 21b abut each other. The radially stepped face 21b is a face that is formed orthogonal to the axis on the outer peripheral surface of the nut 21 due to the difference in outer diameter between the large diameter cylindrical portion 212a and the small diameter cylindrical portion 212b of the nut 21. By setting in advance the dimensions of the components such that a predetermined preload is applied at a predetermined contact angle to the bearing balls 54 when the right end face 53b of the second inner ring 53 and the radially stepped face 21b formed on the outer peripheral surface of the nut 21 abut each other, a desired preload can be applied without controlling the press-fit dimensions. Then, the second seal member 58 is press-fitted between the outer ring 51 and the second inner ring 53 from the direction C.

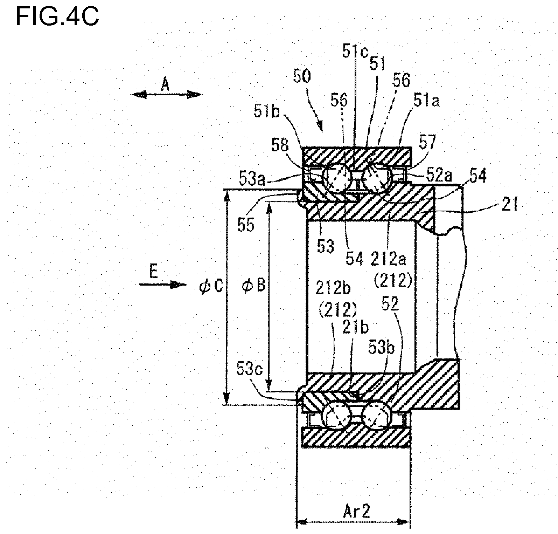

Subsequently, the second inner ring 53 is press-fitted to a predetermined position in the direction A (axial direction), and then the enlarged diameter portion material 55A is caulked in the direction of the arrows RR of FIG. 4B. Thus, the enlarged diameter portion material 55A (end) is enlarged radially outward to form the enlarged diameter portion 55 (see FIG. 4C). In this step, caulking may be performed using any method. In this embodiment, caulking is performed using well-known rolling caulking. In this step, the enlarged diameter portion 55 has a disk shape as viewed from a direction E. However, the enlarged diameter portion 55 may have any shape other than a disk, as viewed from the direction E. The enlarged diameter portion 55 may have the shape of flower petals defined by small pieces arranged in a radial pattern (not illustrated), as viewed from the direction E. The enlarged diameter portion 55 may include a portion that is only partially enlarged at least in the circumferential direction (not illustrated).

The enlarged diameter portion 55 is a part of the nut 21 in the second range Ar2, supports an end face 53c (corresponding to an end) of the second inner ring 53 on the side opposite to the first inner ring portion 52, and has an outside diameter ϕC greater than a bore diameter ϕB of the second inner ring 53 (ϕB < ϕC). When the enlarged diameter portion material 55A is transformed into the enlarged diameter portion 55 by caulking, the enlarged diameter portion 55 urges the second inner ring 53 against the first inner ring portion 52 in the direction A (axial direction) with a predetermined load. Thus, it is possible to extremely easily achieve both preventing reliably the second inner ring 53 from coming off the end of the nut 21 at the second end side thereof, and applying a preload. This contributes to a cost reduction.

The inner peripheral surface of the bearing support portion 212 of the nut 21 in the second range Ar2 does not include the ball nut portion 211, but includes only a flat peripheral surface with no irregularities. Therefore, even when the inner peripheral surface of the bearing support portion 212 in the vicinity of the enlarged diameter portion 55 is slightly affected by the caulking force upon caulking the enlarged diameter portion 55, the ball nut portion 211 in the first range Ar1 is not affected, and hence the ball nut portion 211 is not deformed at all. As mentioned above, the first range Ar1 and the second range Ar2 do not overlap each other in the axial direction. Accordingly, the above effects are reliably obtained. Thus, the ball screw device 40 can operate appropriately.

In the above embodiment, the second inner ring 53 of the bearing device 50 is configured such that the inner peripheral surface of a side of the L-shaped cross section is fitted to the outer peripheral surface of the small diameter cylindrical portion 212b of the nut 21 in the second range Ar2 by interference fit. However, the present invention is not limited to this aspect, and the inner peripheral surface of the second inner ring 53 may be fitted to the outer peripheral surface of the small diameter cylindrical portion 212b of the nut 21 by transition fit. With this configuration, the same effects can be obtained.

The following describes the effects of the above embodiment. According to the above embodiment, the steering system 10 includes: the housing 11, the steered shaft 20 supported on the housing 11 so as to be reciprocally movable in the axial direction to steer steered wheels 28 and 28; the ball screw device 40 including the ball screw portion 23 formed on the outer peripheral surface of the steered shaft 20, the nut 21 disposed on the outer peripheral side of the ball screw portion 23 and having the ball nut portion 211 on the inner peripheral surface thereof, and the plurality of rolling balls 24 arranged between the ball screw portion 23 and the ball nut portion 211; the motor M fixed to the housing 11; the drive force transmission mechanism 32 that transmits a drive force from the motor M to the nut 21; and the bearing device 50 that supports the nut 21 such that the nut 21 is rotatable about the axis thereof relative to the housing 11. The ball nut portion 211 is formed in the first range Ar1 on the first end side of the nut 21 in the axial direction thereof, and the bearing device 50 supports the nut 21 on the housing 11 in the second range Ar2 on the second end side of the nut 21 in the axial direction thereof.

The bearing device 50 includes: the outer ring 51 disposed on the inner peripheral side of the housing 11, and having the first outer ring raceway 51a formed on the inner peripheral surface thereof on the ball nut portion 211 side in the second range Ar2 of the nut 21, and the second outer ring raceway 51b formed on the second end side in the second range Ar2 of the nut 21; the first inner ring portion 52 formed as a part of the nut 21 in the second range Ar2, and having the first inner ring raceway 52a formed on the outer peripheral surface thereof at the position corresponding to the first outer ring raceway 51a of the outer ring 51; the second inner ring 53 having the second inner ring raceway 53a formed on the outer peripheral surface thereof at the position corresponding to the second outer ring raceway 51b of the outer ring 51, and fitted to the outer peripheral surface of the nut 21 in the second range Ar2; the plurality of bearing balls 54 that roll in two rows respectively between the first outer ring raceway 51a and the first inner ring raceway 52a and between the second outer ring raceway 51b and the second inner ring raceway 53a; and the enlarged diameter portion 55 formed as a part of the nut 21 in the second range Ar2, supporting an end of the second inner ring 53 on the side opposite to the first inner ring portion 52, and having the outside diameter ϕC greater than the bore diameter ϕB of the second inner ring 53.

In this manner, the bearing device 50 includes: the outer ring 51 formed as a separate unit from the nut 21; the first inner ring portion 52 formed integrally with a part of the nut 21 in the second range Ar2; the second inner ring 53 formed as a separate unit from the nut 21 and fitted to the outer peripheral surface of the nut 21 in the second range Ar2; the bearing balls 54; and the enlarged diameter portion 55 formed as a part of the nut 21 in the second range Ar2 and supporting an end of the second inner ring 53 on the side opposite to the first inner ring portion 52; thereby forming an angular ball bearing. Accordingly, the bearing device 50 can be manufactured at low cost compared to the case where an angular ball bearing is purchased and mounted on a bearing device. The second inner ring 53 formed as a separate unit from the nut 21 can be prevented from coming off, by the simple enlarged diameter portion 55 that can be formed by caulking or the like, for example. Therefore, the cost can be effectively reduced in this regard as well.

Further, the inner peripheral surface of the bearing support portion 212 of the nut 21 in the second range Ar2 does not include the ball nut portion 211, but includes only a flat peripheral surface with no irregularities. Therefore, even when the inner peripheral surface of the bearing support portion 212 in the vicinity of the enlarged diameter portion 55 is affected by the caulking force upon caulking the enlarged diameter portion 55, the ball nut portion 211 in the first range Ar1 is not affected, and hence the ball nut portion 211 is not deformed at all. Thus, the ball screw device 40 can operate appropriately.

According to the above embodiment, the enlarged diameter portion 55 urges the second inner ring 53 against the first inner ring portion 52 in the axial direction. With this configuration, in the bearing device 50, there is no clearance between the bearing balls 54 and the first outer ring raceway 51a and the first inner ring raceway 52a or between the bearing balls 54 and the second outer ring raceway 51b and the second inner ring raceway 53a having a predetermined contact angle, and a predetermined contact pressure (preload) can be applied. Accordingly, the rigidity of the bearing device 50 (angular ball bearing) can be increased, so that the reliability in supporting the nut 21 is improved.

According to the above embodiment, the second inner ring 53 is fitted to the outer peripheral surface of the nut 21 in the second range Ar2 by interference fit or transition fit. Accordingly, the bearing device 50 (angular ball bearing) can be manufactured at low cost. Further, the second inner ring 53 and the outer peripheral surface of the nut 21 have no clearance or a very small clearance therebetween, so that the rigidity of the bearing device 50 (angular ball bearing) can be appropriately secured.

According to the above embodiment, the second range Ar2 does not overlap the first range Ar1 in the axial direction. Accordingly, the ball nut portion 211 is disposed in a region outside the first inner ring portion 52 that is formed integrally with the nut 21. This allows use of a nut (ball screw nut) of the type wherein the deflectors 41 and 42 are mounted from the outer peripheral side.

According to the above embodiment, the motor M has the output shaft 37 disposed at a position offset from the steered shaft 20. The drive force transmission mechanism 32 includes: the drive pulley 36 disposed on the output shaft 37 of the motor M so as to be rotatable therewith; and the driven pulley 34 coupled to the drive pulley 36 via the toothed belt 35, and disposed on the outer peripheral side of the nut 21 in the first range Ar1 so as to be rotatable with the nut 21. Thus, a drive force is transmitted between the output shaft 37 and the nut 21 via the toothed belt 35. With this configuration, the driven pulley 34 is disposed on the outer peripheral side of the nut 21 in the first range Ar1 where the ball screw device 40 is disposed. Therefore, the total length of the nut 21 can be reduced, and hence the size of the steering system can be reduced. Further, since the bearing device 50 and the drive force transmission mechanism 32 can be disposed adjacent to each other in the direction A (axial direction), the moment applied to the cantilevered bearing device 50 by the tension of the toothed belt 35 can be reduced.

Since the bearing device 50 is applied to the rack-parallel steering system 10, it is possible to reduce fluctuations of the steering torque of the steering system 10, and improve the steering feeling. That is, in a related-art technique, a double-row angular ball bearing is used that has two inner rings formed separately from a nut, and the inner rings are clearance-fitted to the nut. Therefore, when the inner rings are fixed to the nut, the central axis of the nut is eccentric or inclined with respect to the central axis of the double-row angular ball bearing. When the nut rotates about the axis thereof with eccentricity or inclination, the rotational resistance of the nut fluctuates, and hence the steering torque of the steering system fluctuates. To cope with this issue, in the steering system 10, one of the inner rings is formed integrally with the nut 21, thereby making it possible to reduce the eccentricity or inclination, and to reduce fluctuations of the rotational resistance of the nut 21. Further, the clearance between the bearing balls 54 and each of the raceways 51a, 52a, 51b, and 53a can be eliminated, so that generation of rattling noise can be prevented.

In the above embodiment, the driven pulley 34 is disposed on the outer peripheral side of the nut 21 in the first range Ar1 where the ball screw device 40 is disposed. However, the present invention is not limited to this aspect. In a modified embodiment, the first range Ar1 and the second range Ar2 of the nut 21 may be spaced apart from each other in the direction A (axial direction), and the driven pulley 34 (drive force transmission mechanism 32) may be disposed between the first range Ar1 and the second range Ar2. Further, in the above embodiment, the driven pulley 34 (drive force transmission mechanism 32) may be disposed on the right side of the first range Ar1 in FIG. 2. With this configuration, although the physical size (total length) of the steering system is increased, it is possible to obtain a reasonable effect in cost reduction and so on.

The present invention may be applied to a steering operation actuator for a steer-by-wire system not including the pinion 13a or the rack 22 of the above embodiment.

In the above embodiment, the bearing device 50 is applied to the rack-parallel steering system 10. However, the present invention is not limited to this embodiment. For example, the present invention may be applied to a steering system of the type wherein the rotational axis of the motor is disposed at the same position as (coaxially with) the axis of the steered shaft 20 (for example, a steering system disclosed in Japanese Patent No. 5120040). In this case as well, the rolling bearing (double-row angular ball bearing) supporting one end of the nut can accurately keep the rotational axis of the motor and the rotational axis of the nut at the other end thereof, which is rotationally driven by the motor, coaxially with each other, so that fluctuations of the rotational resistance of the nut can be reduced. Further, the clearance between the bearing balls and each raceway can be eliminated, so that generation of rattling noise can be prevented.

## Claims

1. A steering system comprising:
a housing;
a steered shaft supported on the housing so as to be reciprocally movable in an axial direction thereof to steer steered wheels;
a ball screw device including a ball screw portion formed on an outer peripheral surface of the steered shaft, a nut disposed on an outer peripheral side of the ball screw portion and having a ball nut portion on an inner peripheral surface, and a plurality of rolling balls arranged between the ball screw portion and the ball nut portion;
a motor fixed to the housing;
a drive force transmission mechanism that transmits a drive force from the motor to the nut; and
a bearing device that supports the nut such that the nut is rotatable about the axis thereof relative to the housing, wherein:
the ball nut portion is formed in a first range on a first end side of the nut in an axial direction thereof; and
the bearing device supports the nut on the housing in a second range on a second end side of the nut in the axial direction thereof,
the bearing device including
an outer ring disposed on an inner peripheral side of the housing, and having a first outer ring raceway formed on an inner peripheral surface thereof on a ball nut portion side in the second range of the nut, and a second outer ring raceway formed on the second end side in the second range of the nut,
a first inner ring portion formed as a part of the nut in the second range, and having a first inner ring raceway formed on an outer peripheral surface thereof at a position corresponding to the first outer ring raceway of the outer ring,
a second inner ring having a second inner ring raceway formed on the outer peripheral surface thereof at a position corresponding to the second outer ring raceway of the outer ring, and fitted to an outer peripheral surface of the nut in the second range,
a plurality of bearing balls that roll in two rows respectively between the first outer ring raceway and the first inner ring raceway and between the second outer ring raceway and the second inner ring raceway, and
an enlarged diameter portion formed as a part of the nut in the second range, supporting an end of the second inner ring on a side opposite to the first inner ring portion, and having an outside diameter greater than a bore diameter of the second inner ring.

2. The steering system according to claim 1, wherein the enlarged diameter portion urges the second inner ring against the first inner ring portion in the axial direction.

3. The steering system according to claim 1 or 2, wherein:
the first outer ring raceway, the second outer ring raceway, the first inner ring raceway, and the second inner ring raceway are angular grooves; and
the bearing device is a double-row angular ball bearing.

4. The steering system according to any one of claims 1 to 3, wherein the second inner ring is fitted to the outer peripheral surface of the nut in the second range by interference fit or transition fit.

5. The steering system according to any one of claims 1 to 4, wherein the second range does not overlap the first range in the axial direction.

6. The steering system according to any one of claims 1 to 5, wherein:
the motor has an output shaft disposed at a position offset from the steered shaft; and
the drive force transmission mechanism includes
a drive pulley disposed on the output shaft of the motor so as to be rotatable therewith, and
a driven pulley coupled to the drive pulley via a toothed belt, and disposed on an outer peripheral side of the nut in the first range so as to be rotatable with the nut,
the drive force transmission mechanism transmitting a drive force between the output shaft and the nut via the toothed belt.
